# EUROPÄISCHE PATENTSCHRIFT

(11) **EP 0 953 795 B1**
(45) Veröffentlichungstag und Bekanntmachung des Hinweises auf die Patenterteilung: **10.01.2001**
(21) Anmeldenummer: 99108434.4
(22) Anmeldetag: 29.04.1999
(51) Int. Cl.: F16L 11/08

(54) **Umflochtener, radial bewehrter Schlauch**
Radial reinforced braided hose
Tuyau souple tressé et renforcé radialement

(30) Priorität: 30.04.1998 DE 19819478
(43) Veröffentlichungstag der Anmeldung: 03.11.1999
(73) Patentinhaber: ALBER KUNSTSTOFFTECHNIK GmbH, D-77971 Kippenheim (DE)
(72) Erfinder: Mehne, Georg, 77972 Mahlberg (DE)
(74) Vertreter: Barz, Peter, Dr.

(56) Entgegenhaltungen:
- DE-C- 836 266
- FR-A- 1 467 950
- GB-A- 694 655

## Beschreibung

Die Erfindung betrifft einen umflochtenen, radial bewehrten Schlauch, der insbesondere für Anwendungen geeignet ist, die hohe Flexibilität und Gleitfähigkeit verbunden mit hoher Zug- und Druckfestigkeit erfordern.

Ein derartiges Anwendungsgebiet sind Küchen- und Badarmaturen, bei denen der Schlauch aus Bohrungen herausgezogen und wieder versenkt werden kann. Die für diesen Zweck bekannten Metallschläuche haben den Nachteil, daß sie hohes Gewicht und einen großen Biegeradius aufweisen und beim Herausziehen oder Versenken in den Bohrungen erhebliche Geräusche entwickeln. Diese Probleme treten bei Kunststoffschläuchen nicht oder in geringerem Umfang auf, jedoch weisen herkömmliche Kunststoffschläuche oft nicht die für diesen Anwendungszweck erforderliche Gleitfähigkeit und mechanische Robustheit auf.

In der DE-PS-836266 wird ein hochelastischer Schlauch für Kraft-, Schmier- und Kühlstoffleitungen beschrieben, der aus einem glatten Innenschlauch mit einer spiralförmigen Bewehrung aus Metall sowie einer Geflechtslage aus einem Stoffmaterial als Abdeckung besteht, wobei auf den glatten Innenschlauch Drahtwindungen gewickelt werden, so daß Draht und Innenschlauch kraftschlüssig verbunden sind. Wegen dieser kraftschlüssigen Verbindung kann der Innenschlauch bei Biegung nicht abflachen und muß unter Ausnutzung seiner Elastizität gelängt bzw. gestaucht werden. Dadurch ist das Biegeverhalten des Schlauches eingeschränkt.

Aufgabe der Erfindung ist es daher, einen Schlauch bereitzustellen, der geringes Gewicht, hohe Flexibilität und Gleitfähigkeit in Kombination mit hoher Zug-, Knick- und Druckfestigkeit sowie mechanischer Robustheit aufweist und gleichzeitig ein verbessertes Biegeverhalten gegenüber den bekannten Schläuchen mit Bewehrung zeigt.

Gegenstand der Erfindung ist ein umflochtener, radial bewehrter Schlauch, der gekennzeichnet ist durch folgende Elemente:
- einen glatten Innenschlauch aus einem flexiblen Material;
- eine äußere Umflechtung aus Kunststoff;
- eine spiralförmige Bewehrung aus Metall oder hartem Kunststoff, die lose im Innenschlauch oder zwischen Innenschlauch und Umflechtung liegt und weder mit dem Innenschlauch noch mit der Umflechtung verbunden ist.

Falls der Schlauch eine glatte, geschlossene Oberfläche aufweisen soll, kann die Umflechtung außerdem mit einer Kunststoffhaut versehen werden.

Im folgenden wird die Erfindung anhand bevorzugter Ausführungsformen unter Bezug auf die Zeichnung näher erläutert.

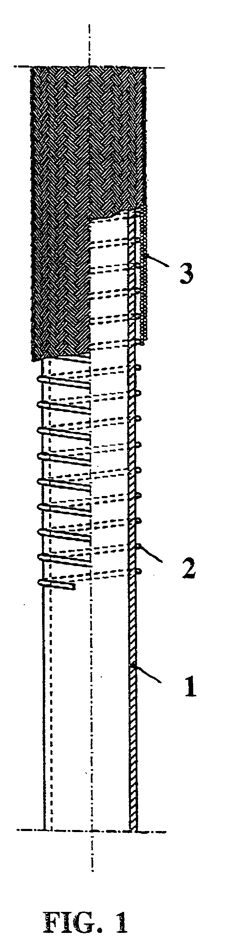

Fig. 1 zeigt schematisch eine Schlauchkonstruktion mit einem Innenschlauch 1, einer spiralförmigen Bewehrung 2 und einer äußeren Kunststoff-Umflechtung 3.

Der Innenschlauch 1 kann aus einem flexiblen Material bestehen, z.B. aus weichem, thermoplastischem oder elastomerem Kunststoff oder Kautschuk. Geeignete Materialien sind beispielsweise Weich-PVC, Polyurethan, Siliconkautschuk, Polyethylen oder Ethylen-Copolymere, wie Ethylen-Vinylacetat-Copolymer. Der Innenschlauch 1 kann auch einen zwei- oder mehrschaligen Aufbau aufweisen. Dabei kann die äußere Schale des Innenschlauchs im Koextrudierverfahren auf die innere Schale des Innenschlauchs 1 aufgebracht werden. Dementsprechend kann bei einem mehrschaligen Aufbau eine mehrfache Koextrusion durchgeführt werden. Für die innere Schale des Innenschlauchs bieten sich als Materialien beispielsweise HD-PE, Polyurethan oder thermoplastische Polyester an. Für die äußere bzw. die äußeren Schale(n) bieten sich beispielsweise LLD-PE oder PVC an. Die Wandstärke des Innenschlauches 1 kann z.B. 0,2 bis 1,2 mm, sein Innendurchmesser z.B. 5 bis 20 mm oder mehr betragen.

Die spiralförmige Bewehrung 2 liegt lose im Innenschlauch oder vorzugsweise zwischen Innenschlauch und Umflechtung. Sie kann an der Innen- oder Außenoberfläche des Innenschlauches anliegen, ist jedoch weder mit dem Innenschlauch noch mit der Umflechtung verbunden. Es liegt also kein kraftschlüssiger Verbund zwischen Innenschlauch und spiralförmiger Bewehrung vor, so daß die Formung der spiralförmigen Bewehrung unabhängig vom Innenschlauch schlauch zu erfolgen hat. Sofern die spiralförmige Bewehrung zwischen und Umflechtung liegt, ist die lichte Weite (Innendurchmesser) der Bewehrung vorzugsweise größer als der Außendurchmesser des Innenschlauchs. Sofern die spiralförmige Bewehrung sich im Innenschlauch befindet, ist der Innendurchmesser des Innenschlauchs vorzugsweise größer als der Außendurchmesser der spiralförmigen Bewehrung. Durch diese Anordnung kann sich der Innenschlauch in gewissen Grenzen beim Biegen relativ zur Bewehrung frei bewegen und in den Außen- und Innenkrümmungen abflachen, bevor die Abstützung der Bewehrungen ein zu starkes Durchfluß verminderndes Abflachen des Innenschlauchs verhindert.

Bevorzugt sind die Abmessungen von spiralförmiger Bewehrung und Innenschlauch so gestaltet, daß zwischen spiralförmiger Bewehrung und Innenschlauch im nicht gebogenen (geraden) Zustand des umflochtenen, radial bewehrten Schlauchs eine Spaltbreite von 0,1 bis 1,5 mm vorliegt. Sofern die spiralförmige Bewehrung zwischen Innenschlauch und Umflechtung liegt, ist der Innendurchmesser der Bewehrung vorzugsweise um 0,2 bis 3,0 mm größer als der Außendurchmesser des Innenschlauchs, und sofern sich die spiralförmige Bewehrung im Innenschlauch befindet, ist der Innendurchmesser des Innenschlauchs vorzugsweise um 0,2 bis 3,0 mm größer als der Außendurchmesser der spiralförmigen Bewehrung. Beim Biegen des Schlauchs wird die Spaltbreite auf einer Seite größer, während sie auf der anderen Seite abnimmt und die Bewehrung schließlich den Innenschlauch abstützt.

Die Bewehrung 2 besteht aus Metalldraht (z.B. Edelstahl oder Kohlenstoffstahl) oder einer Wendel aus hartem Kunststoff (z.B. Polyamid, Polyester, Polyurethan, Polypropylen, Polycarbonat). Eine Bewehrung aus Metall ist bevorzugt. Die Bewehrung 2 hat einen rechteckigen oder vorzugsweise runden Querschnitt; ihr Durchmesser beträgt vorzugsweise 0,5 bis 1,5 mm. Die Ganghöhe der spiralförmigen Bewehrung 2 liegt gewöhnlich im Bereich von 2 bis 6 mm. Die Bewehrung 2 ist vorzugsweise einstückig über die gesamte Schlauchlänge. Gegebenenfalls kann die Bewehrung 2 jedoch auch in Form mehrerer separater Einzellängen ausgebildet sein.

Der bewehrte Innenschlauch ist mit einer Umflechtung 3 versehen und zwar so dicht, daß die gewünschte Zug- und Druckfestigkeit des Schlauchs erzielt wird. Für die Umflechtung 3 eignen sich thermoplastische oder elastomere Kunststoffe, z.B. Polyolefine wie mono- oder biaxial gerecktes Polyethylen oder Polyamide. Zur Herstellung der Umflechtung 3 verwendet man gewöhnlich Monofile von z.B. 0,2 bis 0,5 mm Durchmesser, die dicht an dicht und vorzugsweise ausschließlich diagonal geflochten werden, d.h. axial zum Innenschlauch 1 verlaufende Monofile werden möglichst vermieden, um die gewünschte Flexibilität des Schlauches zu gewährleisten. Die Druckfestigkeit des Schlauches läßt sich anhand des Flechtwinkels und der Anzahl der geflochtenen Fäden optimieren. Letztere liegt gewöhnlich im Bereich von 24 bis 192 Fäden. Durch Verwendung verschieden gefärbter Fäden können mehrfarbige Flechtmuster erzeugt werden.

Für Anwendungsbereiche, in denen der Schlauch eine glatte, geschlossene Oberfläche aufweisen soll, kann auf die Umflechtung 3 eine Kunststoffhaut z.B. aus Polyurethan oder einem anderen thermoplastischen Kunststoff aufgebracht werden. Diese Außenhaut kann z.B. eine Dicke von 0,2 bis 0,5 mm aufweisen.

Der erfindungsgemäße Kunststoffschlauch zeichnet sich aus durch geringes Metergewicht, leichte Handhabung, hohe Flexibilität und Gleitfähigkeit, insbesondere zeigt er ein ausgezeichnetes Biegeverhalten. Gleichzeitig besitzt er hohe Zug-, Knick- und Druckfestigkeit sowie mechanische Robustheit mit damit verbundener langer Lebensdauer. Da im Gegensatz zu herkömmlichen Schläuchen der Innenschlauch keinen Schichtenverbund gewährleisten muß, steht eine wesentlich breitere Materialauswahl zur Verfügung. Außerdem ermöglicht die Verwendung eines einfachen, glatten Innenschlauchs eine einfachere Anschlußtechnik, die trotzdem hohe Dichtigkeit und Zugfestigkeit gewährleistet. Der Innenschlauch kann auch wesentlich dicker ausgebildet werden als bei herkömmlichen Schläuchen, so daß bei Druckbelastung eine unerwünschte Ausdehnung in die Windungshohlräume der spiralförmigen Bewehrung und eine damit verbundene Verschlechterung der Durchflußwerte vermieden werden. Eine unerwünschte Druckverformung läßt sich auch dadurch vermeiden, daß eine dünne Stahlspirale mit relativ enger Steigung verwendet wird, wodurch ein minimaler Hohlraum zwischen Innenschlauch und Umflechtung entsteht. Zusätzlich verhindert die spiralförmige Bewehrung ein Einknicken des Schlauches bei Zug- oder Biegebeanspruchung, so daß eine deutlich erhöhte Stabilität gegen äußere mechanische Einflüsse erzielt wird. Schließlich trägt auch die äußere Umflechtung zu der mechanischen Robustheit, Zug- und Druckfestigkeit, Flexibilität und vor allem Gleitfähigkeit des Schlauches bei.

Aufgrund dieser Eigenschaften eignet sich der erfindungsgemäße Schlauch hervorragend für alle Anwendungen, bei denen Schläuche in Bohrungen geführt werden, z.B. im Sanitärbereich für versenkbare Küchen- und Badarmaturen. Wegen seiner Flexibilität und Leichtigkeit ist der Schlauch aber auch als Druckluftschlauch für Druckluftwerkzeuge und -pistolen geeignet.

## Patentansprüche

1. Umflochtener, radial bewehrter Schlauch, gekennzeichnet durch:
a) einen glatten Innenschlauch aus einem flexiblen Material;
b) eine äußere Umflechtung aus Kunststoff;
c) eine spiralförmige Bewehrung aus Metall oder hartem Kunststoff, die lose im Innenschlauch oder zwischen Innenschlauch und Umflechtung liegt und weder mit dem Innenschlauch noch mit der Umflechtung verbunden ist.

2. Schlauch nach Anspruch 1, dadurch gekennzeichnet, daß der Innenschlauch aus einem thermoplastischen oder elastomeren Kunststoff oder aus Kautschuk besteht.

3. Schlauch nach Anspruch 1 oder 2, dadurch gekennzeichnet, daß die Umflechtung aus Monofilen eines thermoplastischen oder elastomeren Kunststoffs besteht.

4. Schlauch nach Anspruch 3, dadurch gekennzeichnet, daß die Monofile ausschließlich diagonal geflochten sind.

5. Schlauch nach einem der Ansprüche 1 bis 4, dadurch gekennzeichnet, daß die spiralförmige Bewehrung aus Metalldraht besteht.

6. Schlauch nach einem der Ansprüche 1 bis 5, dadurch gekennzeichnet, daß die spiralförmige Bewehrung lose an der Außenoberfläche des Innenschlauches anliegt.

7. Schlauch nach einem der Ansprüche 1 bis 6, dadurch gekennzeichnet, daß auf die Umflechtung eine glatte Kunststoff-Außenhaut aufgebracht ist.

## Claims

1. A braided, radially reinforced hose which is characterized by
a) a smooth internal hose made of flexible material;
b) an external braiding made of plastic material;
c) a spiral reinforcement made of metal or hard plastic material which is loosely positioned inside said internal hose or between said internal hose and said braiding and is neither attached to said internal hose nor to said braiding.

2. The hose as claimed in claim 1, characterized in that said internal hose consists of a thermoplastic or elastomeric plastic material or of rubber.

3. The hose as claimed in claims 1 or 2, characterized in that said braiding consists of monofilaments of a thermoplastic or elastomeric plastic material.

4. The hose as claimed in claim 3, characterized in that said monofilaments are braided exclusively diagonally.

5. The hose as claimed in any one of claims 1 to 4, characterized in that said spiral reinforcement consists of metal wire.

6. The hose as claimed in any one of claims 1 to 5, characterized in that said spiral reinforcement loosely contacts the outer surface of said internal hose.

7. The hose as claimed in any one of claims 1 to 6, characterized in that a smooth outer skin of plastic material is provided over said braiding.

## Revendications

1. Tuyau souple entouré d'une tresse, à armure radiale, caractérisé par :
a) un tuyau intérieur lisse, en un matériau souple;
b) une tresse extérieure en matière plastique;
c) une armure en spirale, en métal ou matière plastique dure, qui est disposée libre dans le tuyau intérieur ou entre le tuyau intérieur et la tresse et n'est liée ni au tuyau intérieur, ni à la tresse.

2. Tuyau souple selon la revendication 1, caractérisé par le fait que le tuyau intérieur est réalisé en une matière plastique thermoplastique ou élastomère ou en caoutchouc.

3. Tuyau souple selon la revendication 1 ou 2, caractérisé par le fait que la tresse est formée de monofilaments d'une matière plastique thermoplastique ou élastomère.

4. Tuyau souple selon la revendication 3, caractérisé par le fait que les monofilaments sont tissés exclusivement en diagonale.

5. Tuyau souple selon une des revendications 1 à 4, caractérisé par le fait que l'armure en spirale est en fil métallique.

6. Tuyau souple selon une des revendications 1 à 4, caractérisé par le fait que l'armure en spirale repose sur la surface extérieure du tuyau intérieur souple.

7. Tuyau souple selon une des revendications 1 à 4, caractérisé par le fait qu'une couche extérieure lisse de matière plastique est appliquée sur la tresse.
